(19) Europäisches Patentamt
European Patent Office
Office européen des brevets

(11) EP 3 334 792 B1

(12) **FASCICULE DE BREVET EUROPEEN**

(45) Date de publication et mention de la délivrance du brevet:
**16.12.2020 Bulletin 2020/51**

(21) Numéro de dépôt: **16763897.2**

(22) Date de dépôt: **08.08.2016**

(51) Int Cl.:
***C09D 163/00*** *(2006.01)* ***C09J 163/00*** *(2006.01)*
***C08G 59/14*** *(2006.01)*

(86) Numéro de dépôt international:
**PCT/FR2016/052052**

(87) Numéro de publication internationale:
**WO 2017/025687 (16.02.2017 Gazette 2017/07)**

(54) **UTILISATION D'UNE COMPOSITION D'ETHERS DE BIS-ANHYDROHEXITOL DE FAIBLE VISCOSITE COMME DILUANT REACTIF POUR COMPOSITIONS RETICULABLES DE RESINES, D'ADHESIFS, DE REVETEMENTS ET DE MATRICES POUR COMPOSITES**

BENUTZUNG EINER ZUSAMMENSETZUNG VON ETHERN AUS BIS-ANHYDROHEXITOL MIT NIEDRIGER VISKOSITÄT ALS REAKTIVVERDÜNNER FÜR HARTBARE HARZZUSAMMENSETZUNGEN, KLEBSTOFFZUSAMMENSETZUNGEN, BESCHICHTUNGSZUSAMMENSETZUNGEN UND ZUSAMMENSETZUNGEN FÜR VERBUNDWERKSTOFFE

USE OF A COMPOSITION OF ETHER OF BIS-ANHYDROHEXITOL WITH LOW VISCOSITY AS RECTIVE DILUENT FOR CURABLE RESIN COMPOSITIONS, ADHESIVE COMPOSITIONS, COATING COMPOSITIONS AND RESIN COMPOSITIONS FOR COMPOSITES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.08.2015 FR 1557712**

(43) Date de publication de la demande:
**20.06.2018 Bulletin 2018/25**

(73) Titulaire: **Roquette Frères**
**62136 Lestrem (FR)**

(72) Inventeurs:
- **BUFFE, Clothilde**
  **59160 Lomme (FR)**
- **PASCAULT, Jean-Pierre**
  **69100 Villeurbanne (FR)**
- **MEIZOSO LOUREIRO, Roi**
  **15402 Ferrol (ES)**
- **PRENDES GONZALEZ, Pilar**
  **15011 Coruña (ES)**
- **PAZ ABUIN, Senén**
  **15552 Vadoviño (ES)**

(74) Mandataire: **Plasseraud IP**
**66, rue de la Chaussée d'Antin**
**75440 Paris Cedex 09 (FR)**

(56) Documents cités:
**WO-A1-2008/147473 FR-A- 1 445 942**
**FR-A1- 3 016 631 GB-A- 1 002 440**

- **DATABASE WPI Week 199004 Thomson Scientific, London, GB; AN 1990-028012 XP002756191, & JP H01 307935 A (EPSON CORP) 12 décembre 1989 (1989-12-12)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 334 792 B1

Printed by Jouve, 75001 PARIS (FR)

## Description

La présente invention est relative à la mise en œuvre d'éthers de bis-anhydrohexitols comme diluants réactifs pour la préparation d'une composition polymérisable et/ou réticulable de résine, d'adhésif, de revêtement ou de matrice pour composites. Non seulement ces produits permettent de diminuer avantageusement la viscosité des mélanges obtenus, mais ils conduisent aussi à une diminution très faible de la température de transition vitreuse des mélanges réticulés, comparativement à d'autres diluants réactifs et tout en améliorant de manière spectaculaire les propriétés mécaniques de ces derniers comme le module d'Young, la résistance à la traction, l'allongement à la rupture et la ténacité.

Les diluants réactifs sont des produits ou des mélanges de produits, présentant un point d'ébullition assez élevé (ou une faible pression de vapeur saturée) ainsi qu'une viscosité relativement faible. On fait en général référence à une valeur seuil de 500 mPa.s pour leur viscosité Brookfield telle que mesurée à 25°C, comme indiqué dans l'article «19.1Diluents » de l'encyclopédie Ullmann (Pham, Ha Q. and Marks, Maurice J., Epoxy Resins. In Ullmann's Encyclopedia of Industrial Chemistry, Wiley-VCH Verlag GmbH & Co. KGaA: 2000). La gamme de diluants réactifs commercialisée par la société Huntsmann sous le nom Araldite® illustre notamment cette valeur (voir la brochure : « Advanced Materials - High Performance Components - Huntsmann ; section 7).

Les diluants réactifs agissent comme des solvants au cours de la fabrication et de la mise en forme de compositions polymérisables et/ou réticulables multiples pour la fabrication par exemple de résine, d'adhésifs, de revêtements divers comme des peintures, de laques, de vernis, ou de matrices pour composites. Par rapport auxdits solvants, ils présentent l'avantage de ne pas s'évaporer ni de migrer, puisqu'ils participent à l'élaboration du réseau tridimensionnel. Dans le cas des compositions polymérisables et/ou réticulables à base de résine époxy, leur fonction première est de diminuer la viscosité de ladite résine, améliorant ainsi sa « machinabilité ». Cette machinabilité fait référence à l'aptitude de la résine à être mise en œuvre pour réaliser des compositions réticulables parfois complexes, puisqu'à base de nombreux autres additifs comme des charges, des pigments, des biocides, des antimousse, etc...

L'état de la technique est très riche sur les diluants réactifs, notamment à destination des matrices organiques polymérisables de type époxy ou résines époxy. On pourra se reporter notamment à la brochure de la société Huntsman discutée ci-dessus. La gamme Araldite® y est déclinée à travers de nombreux produits, tels que ceux à base d'éther diglycidylique de butanediol (Araldite® DY 026), d'éther alkyl (C12-C14) glycidylique (Araldite® DY-E) ou encore d'éther triglycidylique de triméthylolpropane (Araldite® DY-T).

GB 1 002 440 A décrit des diluants réactifs à base d'éther glycidique de tetrahydrofurfuryle. FR 1 445 942 décrit des diluants réactifs à base de 1,3-dioxolane. JP H01 307935 divulgue l'utilisation de diluants réactifs dans des compositions d'adhésif qui présentent une faible viscosité et une température de transition vitreuse élevée (Tv) toutefois les diluants réactifs ne sont pas précisés.

Ceci étant, tout en cherchant à garantir un excellent niveau de performances aux diluants réactifs qu'il fabrique, l'homme du métier doit aujourd'hui intégrer de nouvelles contraintes notamment sur le plan environnemental. Le développement de matériaux polymères issus de ressources biologiques renouvelables à court terme est en effet devenu un impératif écologique et économique majeur, face à l'épuisement et à la montée des prix des ressources fossiles telles que le pétrole. Dans ce contexte, l'utilisation de dianhydrohexitols, issus de (poly)saccharides végétaux, apparaît prometteuse pour remplacer des monomères d'origine pétrochimiques.

Dans un tel contexte, la société demanderesse est parvenue à identifier des produits qui satisfont à ces contraintes environnementales, et qui de manière tout à fait surprenante se comportent comme d'excellents diluants réactifs pour des compositions polymérisables et/ou réticulables notamment à base de résine époxy, diminuant avantageusement la viscosité Brookfield des dites compositions.

De plus, à la différence des diluants réactifs classiques, les produits dont l'utilisation fait l'objet de la présente invention permettent de diminuer très modestement la température de transition vitreuse des compositions polymérisées et/ou réticulées. Les diluants réactifs classiques présentent en effet comme inconvénient majeur de plastifier la composition polymérisée et/ou réticulée et de diminuer de ce fait la température de transition vitreuse de la dite composition.

Les produits dont l'utilisation fait l'objet de la présente invention permettent aussi d'améliorer les propriétés mécaniques et notamment la résistance au choc des compositions polymérisées ou réticulées. Ceci est d'autant plus surprenant et avantageux qu'il est bien connu que les diluants réactifs peuvent impacter de manière négative ces propriétés, comme souligné dans le document « Ullman encyclopedia of industrial chemistry» (Pham, Ha Q. and Marks, Maurice J., Epoxy Resins. In Ullmann's Encyclopedia of Industrial Chemistry, Wiley-VCH Verlag GmbH & Co. KGaA: 2000) déjà discuté.

Comme le démontrent les exemples qui supportent la présente demande, le niveau de performances atteint pour les propriétés mécaniques et notamment la résistance au choc des compositions polymérisées et/ou réticulées renfermant les produits dont l'utilisation fait l'objet de la présente invention est bien supérieur à celui obtenu avec des diluants réactifs commerciaux, tels que l'éther diglycidylique de butanediol, l'éther alkyl (C12-C14) glycidylique ou encore l'éther triglycidylique de triméthylolpropane.

Les produits en question et dont l'utilisation fait l'objet de la présente invention, par ailleurs déjà connus,

consistent en des éthers de bis-anhydrohexitols

- de formule (I) :

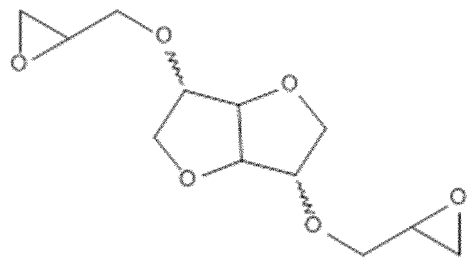

(I)

- et présentant une viscosité Brookfield mesurée à 20°C inférieure à 500 mPa.s.

Indépendamment de leur viscosité, ces produits sont aujourd'hui largement connus et décrits dans la littérature, de même que leur procédé de synthèse. Néanmoins, il n'avait jamais été envisagé ni suggéré d'utiliser de tels produits en tant que diluants réactifs.

Un des procédés connus pour leur synthèse repose sur la formation initiale d'une solution d'un sel d'isohexide en présence d'espèces très réactives tels que l'hydrure de sodium ou le sodium métallique, puis sur la réaction avec de l'épichlorhydrine. Le document US 3,272,845 en est une illustration.

Le document US 4,770,871 propose une méthode alternative, qui évite de faire appel à l'hydrure métallique ou au sodium métallique. Cette méthode consiste à faire réagir un bis-anhydrohexitol et un carbonate d'alkyle en présence d'un catalyseur basique, et dans des conditions de température et de pression élevées (200 à 300°C, 5 MPa).

On connaît aussi le document WO 2008/147472 qui décrit un autre procédé ne mettant pas en œuvre les composés dangereux précités. Ce document propose une méthode de synthèse par mise en solution d'un isohexitol dans un solvant, ajout d'une base, conduite d'une distillation azéotropique avec le solvant, ajout d'un composé choisi dans le groupe consistant en un halogénure d'alkyle ou d'aralkyle, et un ester sulfonate de l'alcool équivalent à l'alcoxyde, et chauffage pour réaliser la réaction d'éthérification et obtenir le produit recherché.

Le document US 3,041,300 propose quant à lui un procédé consistant à faire réagir à pression atmosphérique et à chaud (environ 110°C) l'isosorbide et l'épichlorhydrine, à ajouter très lentement un réactif basique comme une solution de soude (pendant au moins 4 heures), et à réaliser une distillation azéotropique. Après filtration et rinçage, on récupère alors l'éther de bis-anhydrohexitol ainsi formé.

Plus récemment, le document WO 2012/157832 a proposé une variante de cette technique, en réalisant cette fois la réaction entre l'isosorbide et l'épichlorhydrine toujours sous pression atmosphérique mais à une température plus modérée (40°C).

Enfin, le document WO 2008/147473 décrit 3 des procédés précédents :

- dans son exemple 1, la méthode basée sur une distillation azéotropique en présence de solvant selon le document WO 2008/147472,
- dans son exemple 2, la méthode utilisant de l'hydrure de sodium selon le document US 3,272,845,
- dans son exemple 4, la méthode reposant sur l'ajout très lent de soude et la distillation azéotropique selon les documents US 3,041,300 et WO 2012/157832.

Ce document WO 2008/147473 enseigne une autre route qui est un procédé en 2 étapes, la première consistant à faire réagir l'isohexitol avec l'épichlorhydrine en présence de trifluorure de bore, puis à ajouter une solution alcaline (exemple 3 de ce document).

On connaît aussi le document WO 2013/188253 qui décrit une méthode consistant à :

- faire réagir un stéréoisomère d'isohexide avec une base de Brönsted dont l'acide conjugué à un pKa supérieur à 16,
- faire réagir le produit résultant avec un bromure d'alkyle
- faire réagir le produit résultant avec au moins 2 équivalents molaires d'acide méta-chloroperbenzoïque.

La société demanderesse a elle-même protégé un procédé original de fabrication de ces produits dans la demande de brevet FR 3 016 631, ledit procédé comprenant les étapes suivantes :

a) mettre en contact un dianhydrohexitol et un halogénure organique,

b) placer le mélange ainsi obtenu de dianhydrohexitol et d'halogénure organique sous vide de manière à obtenir une dépression comprise entre 100 mbars et 1000 mbars,

c) chauffer le mélange sous vide à une température comprise entre 50°C et 120°C et réaliser ainsi une distillation azéotropique,

d) ajouter ensuite au dit mélange un réactif basique pendant une durée comprise entre 1 heure et 10 heures et poursuivre alors la distillation azéotropique,

e) récupérer la composition d'éthers de bis-anhydrohexitols après une étape de filtration, concentration du filtrat et éventuellement une étape de purification.

Ce procédé présente l'avantage d'être à la fois exempt de solvants et d'autres composés potentiellement dangereux comme l'hydrure métallique, le sodium métallique, ou le trifluorure de bore.

La présente invention n'est en aucun cas limitée par le procédé d'obtention de la composition d'éthers de bis-anhydrohexitols de formule (I). Il est à noter que l'ensemble des procédés précités conduisent en fait à des mélanges de composés de formule (II) dont la viscosité est fonction notamment de la présence et de la quantité d'oligomères. A ce titre, si la composition obtenue ne présentait pas immédiatement la caractéristique requise en terme de viscosité (viscosité Brookfield inférieure à 500 mPa.s à 20 °C), l'homme du métier saurait alors appliquer un traitement subséquent (comme une distillation) afin d'éliminer suffisamment d'espèces oligomériques, et donc de réduire la viscosité du milieu.

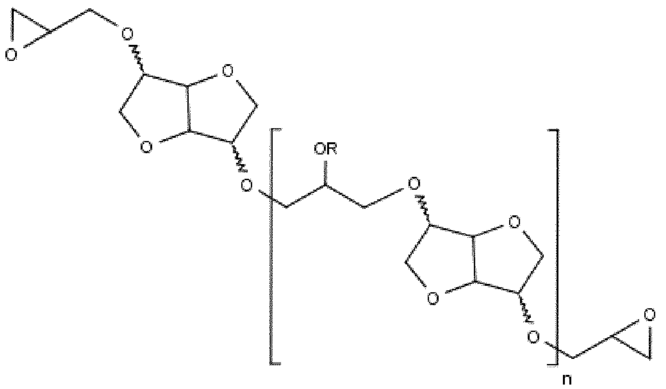

R = H ou 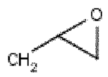

(II)

A ce titre, et selon une variante préférée, l'éther de bis-anhydrohexitols de formule (I) est celui obtenu par le procédé décrit dans la demande de brevet FR 3 016 631 susmentionnée, avec mise en œuvre de l'étape de purification (au niveau de l'étape e)) sous forme d'une étape de fractionnement, telle que notamment réalisée par distillation.

Rien ne suggérait de mettre en œuvre une telle étape de fractionnement et plus particulièrement une étape de distillation dans la demande précitée, en vue d'obtenir un diluant réactif efficace. A fortiori, rien non plus ne divulguait ni n'incitait de conduire cette étape de distillation de manière à viser une viscosité Brookfield inférieure à 500 mPa.s à 20 °C. Mais ce qui reste encore le plus surprenant, c'est qu'un tel produit soit encore plus performant que les meilleurs diluants réactifs du marché, qui sont ceux exemplifiés dans la présente demande et décrits plus haut, notamment sous des termes et des marques non seulement bien connus de l'homme du métier mais aussi du grand public comme Araldite®.

A ce titre, les produits dont l'utilisation fait l'objet de la présente invention permettent en effet d'obtenir des matériaux polymérisés et/ou réticulés présentant un compromis encore jamais égalé en termes de propriétés mécaniques et de maintien de la température de transition vitreuse. On rappelle à cet égard que les produits utilisés comme comparatifs dans la demande de brevet FR 3 016 631 n'étaient autres que des produits « identiques » d'un point de vue chimique, mais obtenus par des procédés différents et donc, non connus comme diluants réactifs et donc beaucoup moins discriminants à cet égard.

Un autre élément de surprise réside dans la viscosité Brookfield « intrinsèque » des produits dont l'utilisation fait l'objet de la présente invention. Cette viscosité est bien supérieure à celle des diluants réactifs de l'art antérieur (comme indiqué dans le tableau 1 ci-après). Il est parfaitement surprenant d'obtenir un compromis encore jamais inégalé entre propriétés mécaniques et température de transition vitreuse, alors que l'enseignement général consisterait à

diminuer au maximum la viscosité d'un diluant réactif en vue d'obtenir une telle performance.

Aussi, un premier objet de la présente invention consiste en l'utilisation, comme diluant réactif pour la préparation d'une composition polymérisable et/ou réticulable de résine, d'adhésif, de revêtement, ou de matrice pour composite, d'au moins un éther de bis-anhydrohexitols

- de formule (I) :

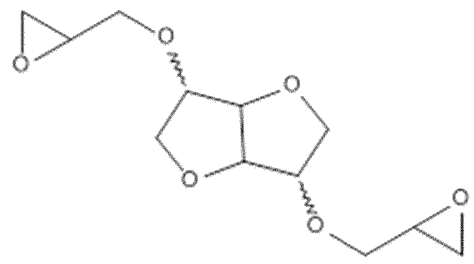

(I)

- et présentant une viscosité Brookfield, mesurée à 20°C inférieure à 500 mPa.s, la dite composition polymérisable et/ou réticulable étant à base d'une matrice organique polymérisable de type époxy. On pourra parler alors de composition à base de résine époxy.

Cette utilisation est aussi caractérisée en ce que le composé de formule (I) présente une viscosité Brookfield, préférentiellement inférieure à 400 mPa.s, très préférentiellement inférieure à 300 mPa.s et encore plus préférentiellement entre 50 et 300 mPa.s, et de manière la plus préférée d'entre toutes entre 100 et 300 mPa.s.

La fonction de « diluant réactif » dans la présente demande recouvre la capacité du produit en question à abaisser la viscosité de la composition polymérisable et/ou réticulable dans laquelle il est destiné à être incorporé.

Cette utilisation est aussi caractérisée en ce que le composé de formule (I) présente un équivalent d'époxy en poids compris entre 129 et 145 g/eq, préférentiellement entre 129 et 136 g/eq. Cet équivalent est mesuré suivant la norme ISO 3001 ou ASTM D1652.

Cette utilisation est aussi caractérisée en ce que le composé de formule (I) présente une teneur massique en chlore inférieure à 0,5 %, préférentiellement inférieure à 0,3 %. Cette teneur est mesurée suivant la norme ISO 21627-3.

La plupart des compositions polymérisables et/ou réticulables utilisées pour notamment la fabrication de résine, d'adhésif, revêtement ou matrice de composites sont des produits complexes pour lesquels les procédés de mise en œuvre et les propriétés finales sont adaptés aux besoins du client par les compétences des formulateurs.

Dans le cas des compositions polymérisables et/ou réticulables à base de matrice organique polymérisable de type époxy, ces compositions contiennent, outre la dite matrice organique polymérisable au moins un durcisseur et/ ou un accélérateur.

La réticulation peut être effectuée à température ambiante ou à température élevée (plus de 100 °C) et/ou sous rayonnement (UV ou à balayage d'électrons) par réticulation cationique.

Par accélérateur, on entend des composés permettant de catalyser la réaction d'homopolymérisation entre les fonctions époxy ou entre les fonctions époxy et l'agent accélérateur. Les acides de Lewis, les bases de Lewis et les photoinitiateurs en sont des exemples.

Par durcisseur, on entend tout composé permettant de former un réseau tridimensionnel par réaction avec les fonctions époxy. Les aminés, amidoamines, bases de Mannich, les acides organiques ou anhydrides, les durcisseurs latents (type dicyandiamide, imidazole,..), les polyesters terminés carboxyliques en sont des exemples.

Dans le cadre des systèmes mono composant, les accélérateurs et/ou durcisseurs sont directement incorporés dans la résine : on parle de système 1K. Tandis que dans les systèmes bi-composant (2K), l'agent durcisseur et / ou agent durcisseur est formulé à part et le mélange n'intervient qu'au moment de l'application et de la mise en forme de la résine. Les compositions polymérisables et/ou réticulables peuvent également contenir des charges organiques ou inorganiques (silice, sable, oxyde d'aluminium, talc, carbonate de calcium,...), pigments, plastifiants, stabilisants, agents thixotropes.

La viscosité de certaines compositions polymérisables et/ou réticulables à base d'une matrice organique polymérisable de type époxy étant trop élevée pour qu'elles soient mises en forme des diluants sont utilisés afin d'améliorer la machinabilité des compositions. La mise en œuvre et la mise en forme des compositions polymérisables et/ou réticulables à base de matrice organique polymérisable de type époxy ou à base de résine époxy sont alors facilitées ainsi que la dispersion des additifs ou charges.

Parmi les constituants des résines époxy on peut citer les glycidyléther du Bisphénol A (DGEBA), les résines novolaques (type phénol ou crésol), les résines époxy base bisphénol F, les résines époxy cycloaliphatique, les résines époxy bromés... A titre d'exemple, les grades standard de résines liquide DGEBA présentent une viscosité entre 10 000 et 15 000 mPa.s à 25°C (DER 331, EPON 828) et les résines Novolaques ont une viscosité supérieure à 20 000 mPa.s (Araldite EPN 1138).

La quantité de diluant réactif additionnée à la composition polymérisable et/ou réticulable est adaptée en fonction de la viscosité finale souhaitée par le cahier des charges. Généralement des quantités de 5 à 50 % en poids sec par rapport au poids total (composition polymérisable, de préférence à base de résine époxy et diluant réactif) sont utilisées. Le diluant réactif est alors additionné, de préférence sous agitation mécanique, à la composition polymérisable et/ou réticulable afin d'obtenir un mélange homogène.

L'éther de bis-anhydrohexitols est additionné à ladite composition polymérisable et/ou réticulable par toutes les techniques bien connues de l'homme du métier.

L'utilisation de diluant réactif pour la préparation de compositions polymérisables et/ou réticulables permet la fabrication de composites par coulage, enrobage, infusion, imprégnation, stratification, injection, pultrusion, d'enroulement filamentaire.

L'utilisation de diluant réactif pour la préparation de compositions polymérisables et/ou réticulables permet aussi de faciliter les dépôts de couches minces, l'utilisation d'un pistolet, d'un rouleau et la mouillabilité suffisante des supports ou fibres.

Les domaines d'application de la présente invention sont notamment ceux du bâtiment et du génie civil (revêtement de sol, béton), la réparation ou la fabrication de composites, les adhésifs, encres, peintures, l'électronique (enrobage des boitiers thermoplastique, revêtement des circuits imprimés).

Un autre objet de la présente invention consiste en une composition polymérisable et/ou réticulable de résine, d'adhésif, de revêtement ou de matrice pour composite, la dite composition comprenant :

- une résine époxy en tant que matrice organique polymérisable et/ ou réticulable ;
- au moins un éther de bis-anhydrohexitols
    - de formule (I) :

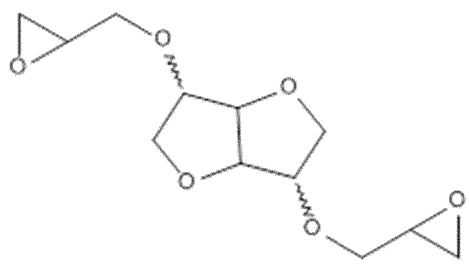

(I)

    - et présentant une viscosité Brookfield, mesurée à 20°C, inférieure à 500 mPa.s.

Cette composition polymérisable et/ou réticulable est aussi caractérisée en ce que le composé de formule (I) présente une viscosité Brookfield mesurée à 20 °C préférentiellement inférieure à 400 mPa.s, très préférentiellement inférieure à 300 mPa.s et encore plus préférentiellement entre 50 et 300 mPa.s, et de manière la plus préférée d'entre toutes entre 100 et 300 mPa.s.

Cette composition polymérisable et/ou réticulable est aussi caractérisée en ce que l'éther de formule (I) présente un équivalent d'époxy en poids compris entre 129 et 145 g/eq, préférentiellement entre 129 et 136 g/eq. Cet équivalent est mesuré suivant la norme ISO 3001 ou ASTM D1652.

Cette composition polymérisable et/ou réticulable est aussi caractérisée en ce que le composé de formule (I) présente une teneur massique en chlore totale inférieure à 0,5 %, préférentiellement inférieure à 0,3 %. Cette teneur est mesurée suivant la norme ISO 21627-3.

La composition réticulable et/ou polymérisable comprend en outre au moins un durcisseur et/ou un accélérateur.

Un autre objet de la présente invention est la composition réticulée et/ou polymérisée obtenue par réticulation et/ou polymérisation de la composition telle que définie précédemment.

Les exemples qui suivent permettent de mieux appréhender le contenu de la présente invention, sans pourtant en limiter la portée.

## EXEMPLES

Les exemples qui suivent portent sur la mise en œuvre de différents diluants réactifs selon l'invention (diglycidyl éther d'isosorbide) ou selon l'art antérieur (produits commerciaux) dans une composition réticulable à base de matrice organique polymérisable de type époxy ou à base de résine époxy.

Préparation du diglycidyl éther d'isosorbide :

On introduit dans un réacteur double enveloppe de 1 litre, chauffé par un bain thermostaté à fluide caloporteur, muni d'un système d'agitation mécanique à pâle, d'un système de contrôle de la température du milieu réactionnel et d'un Dean Stark inversé surmonté d'un réfrigérant, 125 g d'isosorbide (0,86 mol, 1 équivalent molaire), 395,6 g d'épichlorhydrine (4,27 mol, 5 équivalents molaires) puis 1,25 g de bromure de triéthylammonium (1% massique par rapport à l'isosorbide).

Le système est amené à une pression de 275 mbar relatif. On chauffe le mélange réactionnel jusqu'à 80°C (Température d'ébullition = 80°C à 275 mbar) avant de débuter l'addition contrôlée de 136,9 g d'une solution aqueuse d'hydroxyde de sodium à 50% (1,71 mol, 2 équivalents molaires). L'addition dure au total 2 h 50. L'eau est alors éliminée en continu par distillation azéotropique.

On filtre sous vide le milieu réactionnel afin d'en éliminer le chlorure de sodium formé au cours du temps et le catalyseur. On lave les sels à l'aide d'épichlorhydrine qui est ensuite éliminé par évaporation sous pression réduite au rotavapor. Une étape de purification par distillation sous pression réduite (<1mBar) est réalisée. Le distillat obtenu correspond alors au diglycidyléther d'isosorbide sous forme d'un liquide limpide et incolore (viscosité Brookfield à 20°C de 218 mPa.s) ayant un équivalent d'époxy de 132 g / équivalent, et présentant une teneur massique en chlore de 0,1 % mesurée selon la norme ISO 21627-3.

Caractéristiques des différents composés testés :

On trouve les principales caractéristiques de la résine époxy et des différents diluants réactifs testés dans le tableau 1 (EE désignant l'équivalent d'époxy en poids qui est mesuré suivant la norme ISO 3001 ou ASTM D1652).

**Tableau 1**

| | Diluant 1 | Diluant 2 | Diluant 3 | Diluant 4 | Résine époxy |
|---|---|---|---|---|---|
| Nom chimique | Diglycidylether d'isosorbide | Triglycidylether de trimethylolpropane | Diglycidylether de 1,4-butanediol | Monoglyciyl-ether d'alcool en C12-C14 | Diglycidylether de bisphenol A (DGEBA) |
| Nom commercial | - | Araldite DY-T | Eposir 7107 Araldite DY-D | Polypox R24 Araldite DY-E | Epotec YD128 |
| EE (g/eq) | 132 | 136 | 101 | 291,5 | 186 |
| Viscosité à 20°C (mPa.s) | 218 | 168 | 14 | 8,3 | 14445 |

## Exemple 1

Cet exemple porte sur la fabrication de compositions entre la résine époxy Diglycidylether de bisphenol A (DGEBA) et différents diluants réactifs en proportions variées, et sur la détermination de la viscosité Brookfield à 20°C des dites compositions.

Pour ce faire, 100 g de résine époxy DGEBA est mélangé à température ambiante avec 11,1 g de diluant réactif. Le mélange est porté à 20°C et la viscosité est mesurée à l'aide d'un viscosimètre rotatif Brookfield, type DV-II+. La mesure est effectuée après stabilisation du milieu maintenu à 20°C à l'aide d'un bain d'eau thermostaté. Les mesures de viscosité sont obtenues avec un couple (Torque) en % du couple maximum compris entre 10 et 100%. Dans toute la présente Demande, la vitesse à laquelle est déterminée la viscosité Brookfield n'est pas indiquée. L'homme du métier sait en effet l'adapter par rapport au choix du rotor et de manière à se placer à un pourcentage du couple (Torque) compris entre 10 et 100 %. Chaque composition est réalisée de la même manière en augmentant la quantité de diluant de manière à obtenir des compositions qui comprennent entre 0 et 40 % en poids de diluant réactif. Pour les diluants commerciaux, le % s'entend comme le % en l'état.

Chaque composition est parfaitement homogène et les viscosités à 20°C sont rassemblées dans le tableau 2.

**Tableau 2**

| % diluant en poids | diluant 1 | diluant 2 | diluant 3 | diluant 4 |
|---|---|---|---|---|
| 0 | 14 445 | 14 445 | 14 445 | 14 445 |
| 10 | 6575 | 5543 | 2160 | 1968 |
| 20 | 4343 | 3287 | 1032 | 744 |
| 30 | 3120 | 2016 | 431 | 234 |
| 40 | 1632 | 1296 | 211 | 126 |

Le tableau 2 démontre que l'introduction de 10 % en poids du diluant réactif selon l'invention, permet de diviser par 2 la viscosité du mélange. En outre, on atteint des niveaux de viscosité comparables à ceux obtenus avec les produits de l'art antérieur.

**Exemple 2**

Cet exemple porte sur la réticulation des compositions obtenues précédemment, et sur la détermination des températures de transition vitreuse des compositions ainsi réticulées.

La réticulation des compositions réticulables de résines époxy est effectuée en présence d'un durcisseur aminé : l'isophorone diamine. La quantité d'isophorone diamine introduite est calculée de manière à ce que le rapport du nombre de groupement -NH sur le nombre de groupement époxy soit égal à 1. L'isophorone diamine est disponible sous la marque Vestamid® IPD par Evonik. L'équivalent de groupement -NH en poids est de 42.5 g / eq. La formule utilisée pour calculer les quantités de diamine à mettre en œuvre est la suivante :

$$m\ (isophorone\ diamine) = \frac{mrésine\ epoxy\ \times 42{,}5}{EErésine\ epoxy} + \frac{mdiluant\ reactif\ \times 42{,}5}{EEdiluant\ réactif}$$

A titre d'exemple, voici comment on a procédé pour la réticulation du mélange entre la résine et 10 % en poids du diluant réactif selon l'invention, les autres essais ayant été réalisés selon le même protocole tout en adaptant les quantités de produits.

90 g de résine époxy sont mélangés à température ambiante avec 10 g de diluant réactif 1. Ensuite, x = 23.7 g d'isophorone diamine, (x étant calculé à l'aide de l'équation précédente et dépend de l'EE du diluant réactif choisi) sont ajoutés et le mélange est agité pendant 1 minute. Le mélange, homogène et s'écoulant à température ambiante, est placé dans un moule en silicone (L=43mm, l=20mm). La réticulation est effectuée 1 jour à température ambiante suivi de 1 jour à 90°C et 3 jours à 130°C en étuve. On obtient alors un matériau solide à température ambiante et ayant une température de transition vitreuse (Tg) de 149°C. La température de transition vitreuse est mesurée par calorimètrie différentielle à balayage (en anglais, differential scanning calorimetry ou DSC) au deuxième passage d'une rampe de température de -100 à 200°C à 10°C/min. Les valeurs de Tg sont reportées dans le tableau 3.

**Tableau 3**

| % diluant en poids | diluant 1 | diluant 2 | diluant 3 | diluant 4 |
|---|---|---|---|---|
| 0 | 150 | 150 | 150 | 150 |
| 10 | 149 | 145 | 123 | 112 |
| 20 | 146 | 138 | 98 | 88 |
| 30 | 145 | 131 | 84 | 58 |
| 40 | 138 | 126 | 33 | 45 |

De manière surprenante, les températures de transition vitreuse sont bien plus élevées avec la mise en oeuvre du diluant réactif selon l'invention. Ces résultats sont particulièrement avantageux en vue d'une application des compositions réticulées ou résines réticulées pour la fabrication d'objet, de composites, revêtements, adhésifs, peintures,

encres etc. susceptibles d'être exposés à des températures élevées, supérieures à 120°C, sans perte de propriétés pendant leur utilisation.

La figure 1 représente pour chaque diluant réactif, l'évolution de la température de transition vitreuse (Tg en °C) de la résine réticulée ou composition réticulée mesurée dans l'exemple 2, en fonction de la viscosité Brookfield de la composition avant réticulation (en mPa.s, mesurée à 20 tours par minute et à 20 °C) mesurée dans l'exemple 1.

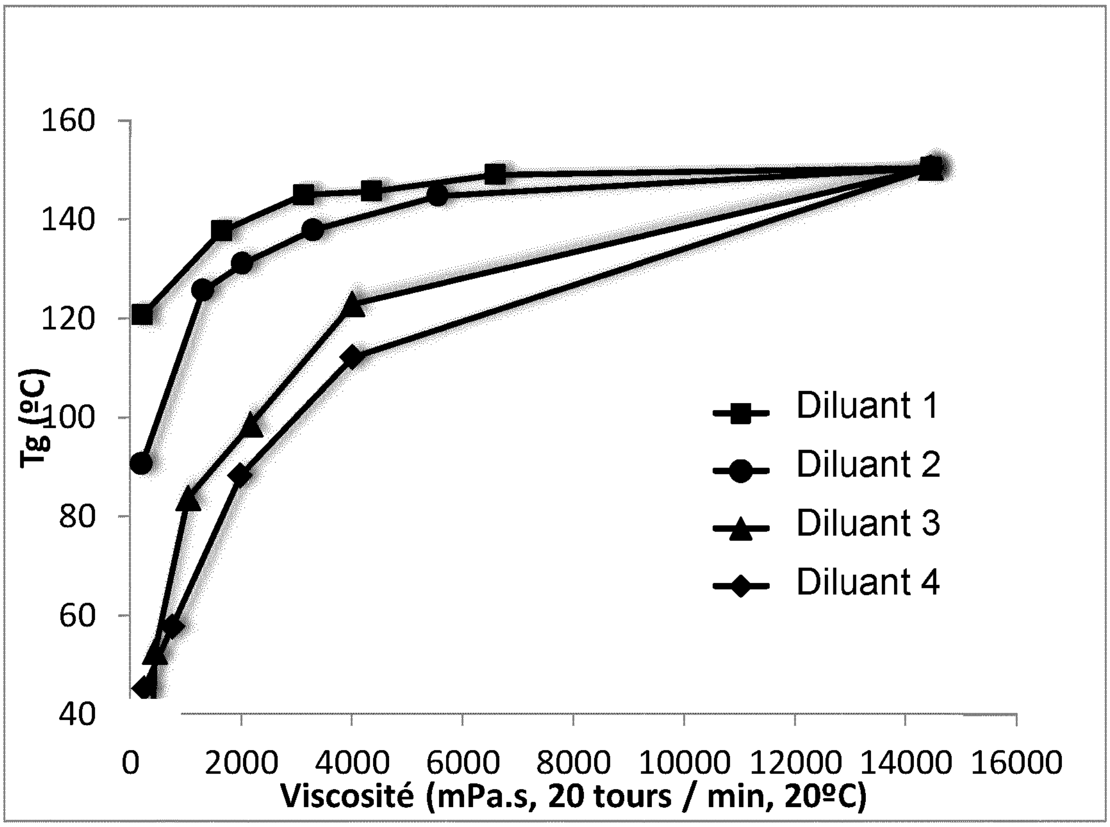


**Figure 1**

La figure 1 illustre très clairement que le diluant réactif 1 selon l'invention offre le meilleur compromis entre la viscosité du mélange et la température de transition vitreuse du mélange réticulé.

**Exemple 3**

Cet exemple concerne la détermination d'un certain nombre de propriétés mécaniques sur les éprouvettes obtenues avec la mise en œuvre de :

- d'aucun diluant réactif (essai n° 1 selon l'art antérieur)
- de 40 % en poids du diluant réactif 1 (essai n° 2 selon l'invention)
- de 40 % en poids du diluant réactif 2 (essai n° 3 selon l'art antérieur).

Les propriétés mécaniques sont déterminées par essai de traction sur des éprouvettes plates :

- module d'Young ou d'élasticité (MPa) : correspond à la contrainte mécanique qui engendrerait un allongement de 100 % de la longueur initiale de l'éprouvette (déterminée selon la méthode décrite dans la norme ASTM D638)
- résistance à la traction (MPa) : correspond à la contrainte mécanique en traction exercée sur une éprouvette jusqu'à sa rupture (déterminée selon la méthode décrite dans la norme ASTM D638)
- allongement à la rupture : définit la capacité d'un matériau à s'allonger avant rupture (déterminée selon la méthode décrite dans la norme ASTM D638)
- ténacité ($K_{IC}$) : caractérise la propriété d'un matériau à résister à la fracture lorsqu'il est fissuré. Plus la valeur de $K_{IC}$ est élevée plus le matériau peut absorber de l'énergie avant de rompre (déterminée selon la méthode décrite dans la norme ASTM D5045).

Les résultats apparaissent dans le tableau 4. Les numéros des essais renvoient aux compositions indiquées au début de l'exemple 3.

**Tableau 4**

| Essai n° | Tg (°C) | Module d'Young (MPa) | Résistance à la traction (MPa) | Allongement à la rupture (%) | Tenacité $K_{IC}$ ($MPa.m^{1/2}$) |
|---|---|---|---|---|---|
| 1 | 150 | 1744 | 49.7 | 3.5 | 0.79 |
| 2 | 138 | 1710 | 57.7 | 4.4 | 1.07 |
| 3 | 126 | 1630 | 54.5 | 4.4 | 0.79 |

L'incorporation de diglyciyléther d'isosorbide permet d'améliorer les propriétés mécaniques et de résistance aux chocs de façon spectaculaire.

Le diluant réactif selon l'invention présente donc de nombreux avantages :

- il offre le meilleur compromis entre la viscosité du mélange et la température de transition vitreuse du mélange réticulé ;
- il conduit à d'excellentes propriétés mécaniques ;
- il augmente de façon importante la ténacité du réseau époxy, au moins autant que 20% d'un élastomère liquide de type CTBN, tout en gardant une très faible viscosité initiale et sans avoir à gérer le problème de séparation de phase induite par la polymérisation (le réseau est homogène d'un point de vue thermodynamique) qui est le lot de tous les additifs de type élastomères liquides.

## Revendications

1. Utilisation, comme diluant réactif pour la préparation d'une composition polymérisable et/ou réticulable de résine, d'adhésif, de revêtement, ou de matrice pour composite, d'au moins un éther de bis-anhydrohexitols

   - de formule (I) :

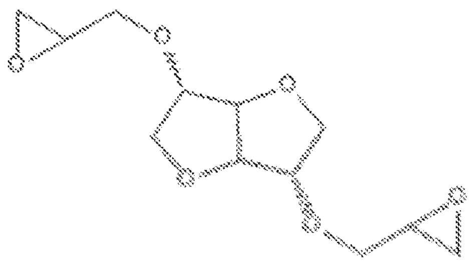

(I)

   - et présentant une viscosité Brookfield, mesurée à 20 °C inférieure à 500 mPa.s,
   la dite composition polymérisable et/ou réticulable étant à base d'une matrice organique polymérisable de type époxy.

2. Utilisation selon la revendication 1, **caractérisée en ce que** le composé de formule (I) présente une viscosité Brookfield mesurée à 20 °C préférentiellement inférieure à 400 mPa.s, très préférentiellement inférieure à 300 mPa.s et encore plus préférentiellement entre 50 et 300 mPa.s, et de manière la plus préférée d'entre toutes entre 100 et 300 mPa.s.

3. Utilisation selon l'une des revendications 1 ou 2, **caractérisée en ce que** le composé de formule (I) présente un équivalent d'époxy en poids compris entre 129 et 145 g/eq, préférentiellement entre 129 et 136 g/eq.

4. Utilisation selon l'une des revendications 1 à 3, **caractérisée en ce que** le composé de formule (I) présente une

teneur massique en chlore inférieure à 0,5 %, préférentiellement inférieure à 0,3 %.

5. Composition polymérisable et/ou réticulable de résine, d'adhésif, de revêtement ou de matrice pour composite, la dite composition comprenant :

- une résine époxy en tant que matrice organique polymérisable et/ ou réticulable ;
- au moins un éther de bis-anhydrohexitols

  - de formule (I) :

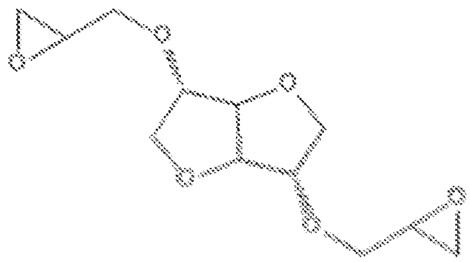

(I)

  - et présentant une viscosité Brookfield, mesurée à 20 °C inférieure à 500 mPa.s.

6. Composition polymérisable et/ou réticulable selon la revendication 5, **caractérisée en ce que** le composé de formule (I) présente une viscosité Brookfield mesurée à 20°C préférentiellement inférieure à 400 mPa.s, très préférentiellement inférieure à 300 mPa.s et encore plus préférentiellement entre 50 et 300 mPa.s, et de manière la plus préférée d'entre toutes entre 100 et 300 mPa.s.

7. Composition polymérisable et/ou réticulable selon l'une des revendications 5 ou 6, **caractérisée** que le composé de formule (I) présente un équivalent d'époxy en poids compris entre 129 et 145 g/eq, préférentiellement entre 129 et 136 g/eq.

8. Composition polymérisable et/ou réticulable selon l'une des revendications 5 à 7, **caractérisée en ce que** le composé de formule (I) présente une teneur massique en chlore inférieure à 0,5 %, préférentiellement inférieure à 0,3 %.

9. Composition polymérisable et/ou réticulable selon l'une des revendications 5 à 8, **caractérisée en ce qu'**elle contient en outre au moins un accélérateur et/ou durcisseur.

10. Composition réticulée obtenue à partir de la composition selon l'une des revendications 5 à 9.

**Patentansprüche**

1. Verwendung als reaktives Verdünnungsmittel zur Herstellung einer polymerisierbaren und/oder vernetzbaren Harz-, Klebstoff-, Beschichtungs- oder Verbundmatrix-Zusammensetzung von mindestens einem Bis-anhydrohexitol-Ether

- der Formel (I):

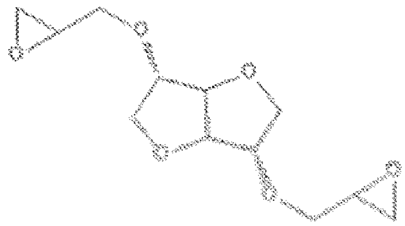

(I)

- mit einer bei 20°C gemessenen Brookfield-Viskosität von weniger als 500 mPa.s, wobei die genannte polymerisierbare und/oder vernetzbare Zusammensetzung auf einer polymerisierbaren organischen Matrix vom Epoxy-Typ basiert.

2. Verwendung nach Anspruch 1, **dadurch gekennzeichnet, dass** die Verbindung der Formel (I) eine bei 20°C gemessene Brookfield-Viskosität von bevorzugt weniger als 400 mPa.s, stark bevorzugt von weniger als 300 mPa.s und noch stärker bevorzugt von zwischen 50 und 300 mPa.s, und am stärksten bevorzugt von zwischen 100 und 300 mPa.s aufweist.

3. Verwendung nach einem der Ansprüche 1 oder 2, **dadurch gekennzeichnet, dass** die Verbindung der Formel (I) ein Epoxy-Gewichtsäquivalent zwischen 129 und 145 g/Äq, bevorzugt zwischen 129 und 136 g/Äq aufweist.

4. Verwendung nach einem der Ansprüche 1 bis 3, **dadurch gekennzeichnet, dass** die Verbindung der Formel (I) einen Chlorgehalt von weniger als 0,5 Gew.-%, bevorzugt weniger als 0,3 Gew.-%, aufweist.

5. Polymerisierbare und/oder vernetzbare Harz-, Klebstoff-, Beschichtungs- oder Verbundmatrixzusammensetzung, wobei die Zusammensetzung umfasst:

- ein Epoxidharz als polymerisierbare und/oder vernetzbare organische Matrix;
- mindestens einen Bis-anhydrohexitol-Ether der Formel (I):

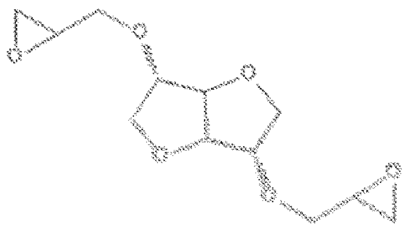

(I)

- und mit einer Brookfield-Viskosität, gemessen bei 20°C, von weniger als 500 mPa.s.

6. Polymerisierbare und/oder vernetzbare Zusammensetzung nach Anspruch 5, **dadurch gekennzeichnet, dass** die Verbindung der Formel (I) eine bei 20°C gemessene Brookfield-Viskosität, bevorzugt von weniger als 400 mPa.s, stark bevorzugt von weniger als 300 mPa.s, noch stärker bevorzugt von zwischen 50 und 300 mPa.s, und am stärksten bevorzugt von zwischen 100 und 300 mPa.s aufweist.

7. Polymerisierbare und/oder vernetzbare Zusammensetzung nach einem der Ansprüche 5 oder 6, **dadurch gekennzeichnet, dass** die Verbindung der Formel (I) ein Epoxy-Gewichtsäquivalent zwischen 129 und 145 g/Äq, bevorzugt zwischen 129 und 136 g/Äq aufweist.

8. Polymerisierbare und/oder vernetzbare Zusammensetzung nach einem der Ansprüche 5 bis 7, **dadurch gekennzeichnet, dass** die Verbindung der Formel (I) einen Chlorgehalt von weniger als 0,5 Gew.-%, bevorzugt weniger als 0,3 Gew.-%, aufweist.

9. Polymerisierbare und/oder vernetzbare Zusammensetzung nach einem der Ansprüche 5 bis 8, **dadurch gekennzeichnet, dass** sie zusätzlich mindestens einen Beschleuniger und/oder Härter enthält.

10. Vernetzte Zusammensetzung, erhalten aus der Zusammensetzung nach einem der Ansprüche 5 bis 9.

**Claims**

1. The use, as reactive diluent for the preparation of a polymerizable and/or crosslinkable resin, adhesive, coating or composite matrix composition, of at least one bis-anhydrohexitol ether

- of formula (I):

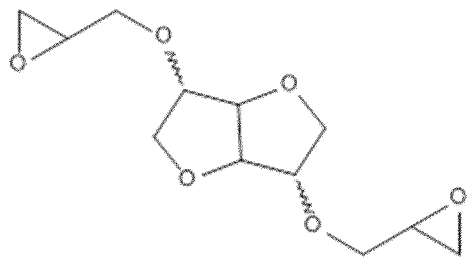

(I)

- and having a Brookfield viscosity, measured at 20°C, of less than 500 mPa.s, said polymerizable and/or crosslinkable composition being based on a polymerizable organic matrix of epoxy type.

2. The use as claimed in claim 1, **characterized in that** the compound of formula (I) has a Brookfield viscosity, measured at 20°C, preferentially of less than 400 mPa.s, very preferentially of less than 300 mPa.s and more preferentially still of between 50 and 300 mPa.s, and most preferably of all of between 100 and 300 mPa.s.

3. The use as claimed in either of claims 1 and 2, **characterized in that** the compound of formula (I) has an epoxy equivalent weight of between 129 and 145 g/eq, preferentially between 129 and 136 g/eq.

4. The use as claimed in one of claims 1 to 3, **characterized in that** the compound of formula (I) has a weight content of chlorine of less than 0.5%, preferentially of less than 0.3%.

5. A polymerizable and/or crosslinkable resin, adhesive, coating or composite matrix composition, said composition comprising:

- an epoxy resin as polymerizable and/or crosslinkable organic matrix;
- at least one bis-anhydrohexitol ether

  - of formula (I):

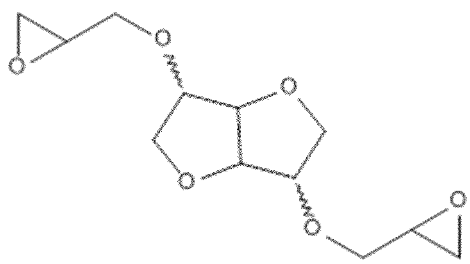

(I)

- and having a Brookfield viscosity, measured at 20°C, of less than 500 mPa.s.

**6.** The polymerizable and/or crosslinkable composition as claimed in claim 5, **characterized in that** the compound of formula (I) has a Brookfield viscosity, measured at 20°C, preferentially of less than 400 mPa.s, very preferentially of less than 300 mPa.s and more preferentially still of between 50 and 300 mPa.s, and most preferably of all of between 100 and 300 mPa.s.

**7.** The polymerizable and/or crosslinkable composition as claimed in either of claims 5 and 6, **characterized in that** the compound of formula (I) has an epoxy equivalent weight of between 129 and 145 g/eq, preferentially of between 129 and 136 g/eq.

**8.** The polymerizable and/or crosslinkable composition as claimed in one of claims 5 to 7, **characterized in that** the compound of formula (I) has a weight content of chlorine of less than 0.5%, preferentially of less than 0.3%.

**9.** The polymerizable and/or crosslinkable composition as claimed in one of claims 5 to 8, **characterized in that** it additionally contains at least one accelerator and/or hardener.

**10.** A crosslinked composition obtained from the composition as claimed in one of claims 5 to 9.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- GB 1002440 A
- FR 1445942
- JP H01307935 B
- US 3272845 A
- US 4770871 A
- WO 2008147472 A
- US 3041300 A
- WO 2012157832 A
- WO 2008147473 A
- WO 2013188253 A
- FR 3016631


### Littérature non-brevet citée dans la description


- Epoxy Resins. **PHAM, HA Q. ; MARKS, MAURICE J.** Ullmann's Encyclopedia of Industrial Chemistry. Wiley-VCH Verlag GmbH & Co. KGaA, 2000
- Ullman encyclopedia of industrial chemistry. **PHAM, HA Q. ; MARKS, MAURICE J.** Epoxy Resins. In Ullmann's Encyclopedia of Industrial Chemistry. Wiley-VCH Verlag GmbH & Co. KGaA, 2000